# EUROPEAN PATENT APPLICATION

(11) **EP 3 573 318 A1**
(43) Date of publication of application: **27.11.2019**
(21) Application number: 18741968.4
(22) Date of filing: 15.01.2018
(51) Int. Cl.: H04N 1/00, G03B 27/62, H04N 1/10, H04N 1/107

(54) **IMAGE-READING DEVICE AND IMAGE-FORMING DEVICE**

(30) Priority: 23.01.2017 JP 2017009560
(71) Applicant: Kyocera Document Solutions Inc., Osaka-shi, Osaka 540-8585 (JP)
(72) Inventor: HAYAMIZU, Hitoshi, Osaka-Shi Osaka 540-8585 (JP)
(74) Representative: Beetz & Partner mbB
(86) International application number: PCT/JP2018/000845
(87) International publication number: WO 2018/135441

(57) **Abstract**

An image-reading device (200) is provided with a first detection unit (45) for detecting that the front side of a cover (5) is within a first distance (LI) to a copy holder (40), a second detection unit (46) for detecting that an opening/closing support part (44) is within a second distance (L2) to the copy holder (40), and a control unit (8). The control unit (8): acquires first detection information due to the first detection unit (45) and second detection information due to the second detection unit (46), respectively; and identifies, on the basis of the first detection information and the second detection information, whether a copy set in place has a thickness equal to or greater than a fixed value.

## Description

### Technical Field

The present disclosure relates to an image reading device for reading a document image, and to an image forming device (image forming apparatus) incorporating such an image reading device.

### Background Art

For example, Patent Document 1 discloses an image processing device which, after reading the image of a document placed on a document stage, outputs the read image data collectively. The image processing device according to Patent Document 1 is provided with a document cover which covers the document stage and which is openable and closable, and an open/closed detecting portion which detects whether the document cover is open or closed. There it is disclosed that as the open/closed detecting portion, a non-contact sensor such as an infrared sensor, an ultrasonic sensor, or a magnetic sensor is used. Thus, even if a thick document such as a book is placed on the document stage, it is possible to detect whether the document cover is open or closed.

### List of Citations

### Patent Literature

Patent Document 1: JP-A-2010-91653

### Summary of the Invention

### Technical Problem

However, the image processing device according to Patent Document 1 only detects, irrespective of the thickness of a document, whether the document cover is open or closed, and it is impossible to separately detect whether the placed document is thick or thin.

In view of the above-mentioned problem with the conventional technology, the present disclosure is aimed at providing an image reading device which can automatically detect whether the cover is open and the thickness of the document placed on the document stage.

### Solution to Problem

To achieve the above object, an image reading device includes a document stage, an image reading portion, a cover, an opening/closing support portion, a first detecting portion, a second detecting portion, and a control portion. The document stage has a reading face. The image reading portion reads an image of a document placed on the reading face. The cover is provided on the document stage, and opens and closes the reading face. The opening/closing support portion is movable toward and away from the document stage, is provided behind the reading face on the document stage, and supports the cover such that its front side is movable toward and away from the document stage. The first detecting portion detects that the front side of the cover is within a first distance from the document stage. The second detecting portion detects that the opening/closing support portion is within a second distance from the document stage. The control portion receives first detecting information from the first detecting portion and second detecting information from the second detecting portion, and determines whether or not a placed document is a document having a predetermined or larger thickness based on the first detecting information and the second detecting information.

### Advantageous Effects of the Invention

According to the present disclosure, it is possible to provide an image reading device which can automatically detect whether the cover is open and the thickness of the document placed on the document stage.

### Brief Description of Drawings

[Fig. 1] is a functional block diagram showing a general configuration of a multifunction peripheral according to the present disclosure;
[Fig. 2] is a diagram showing an outline of a construction of an example of the multifunction peripheral shown in Fig. 1;
[Fig. 3] is a functional block diagram showing a general configuration of an image reading device;
[Fig. 4] is a side view of a cover fitted on the housing of the image reading portion via an opening/closing support portion;
[Fig. 5] is a plan view of the housing and the cover of the image reading portion shown in Fig. 4;
[Fig. 6] is a side view showing the image reading device with the cover opened;
[Fig. 7] is a side view showing the image reading device with a thin document placed on a contact glass;
[Fig. 8] is a side view showing the image reading device with a thick document placed on the contact glass;
[Fig. 9] is a flow chart showing a procedure for reading a document image by the image reading device according to the present disclosure; and
[Fig. 10] is a diagram showing a state where an open book is being read on the image reading device according to the present disclosure.

### Description of Embodiments

Hereinafter, with reference to the accompanying drawings, embodiments of the present disclosure will be described with a multifunction peripheral 100 taken as an example. All futures, such as structures and arrangements, described in connection with the embodiments are merely examples for the sake of description, and are in no way meant to limit the scope of the disclosure.

### <First embodiment>

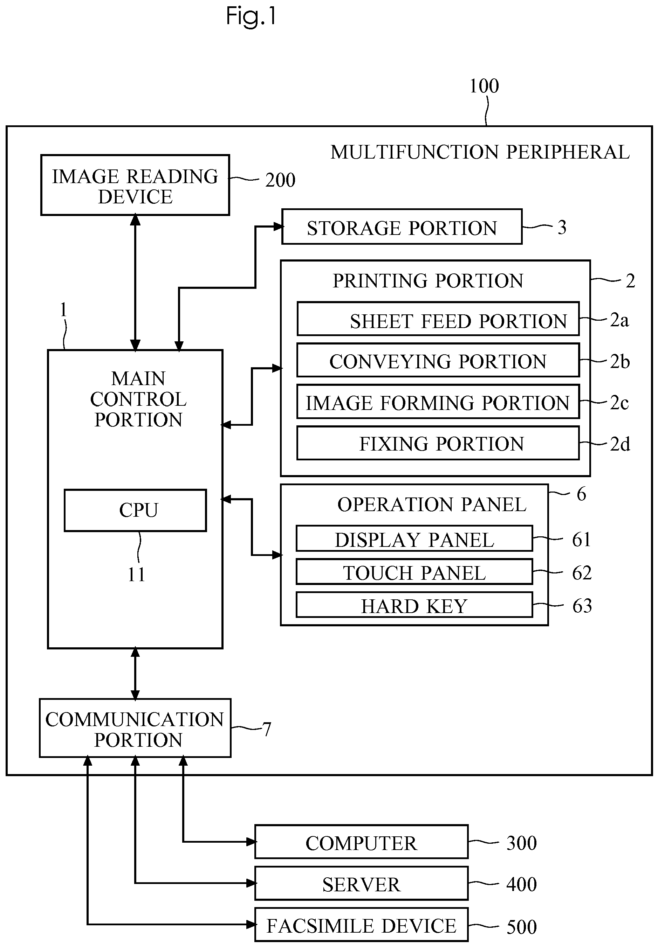

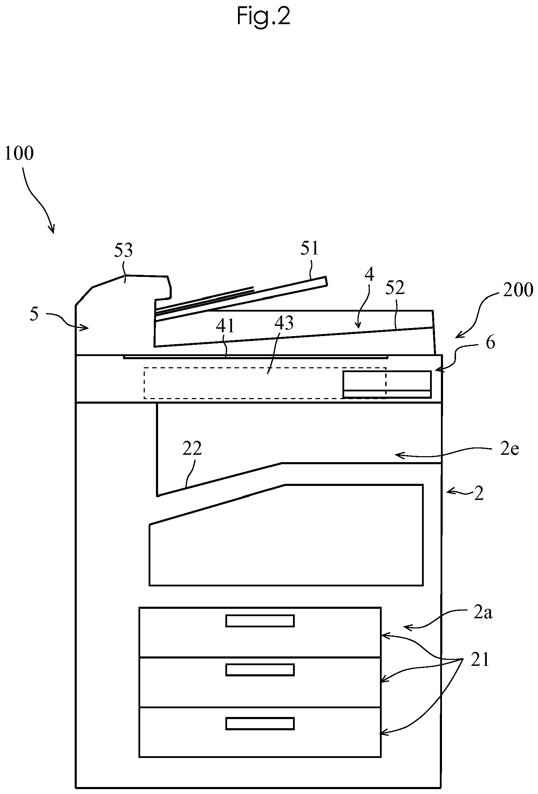

Fig. 1 is a functional block diagram showing a general configuration of a multifunction peripheral including an image reading device according to the present disclosure. Fig. 2 is a diagram showing an outline of a construction of an example of the multifunction peripheral shown in Fig. 1. In the following description, the top and bottom are defined relative to the multifunction peripheral 100 shown in Fig. 2. The front (front side) and rear (rear side) are defined relative to the multifunction peripheral 100 shown in Fig. 2 as follows: the near side with respect to the plane of Fig. 2 is the front (front side), and the far side with respect to the place is the rear (rear side).

### < Multifunction peripheral 100>

The multifunction peripheral 100 is a multifunction peripheral provided with a plurality of functions such as copying function, printing function, scanning function, and facsimile function.

As shown in Figs. 1 and 2, the multifunction peripheral 100 is provided with an image reading device 200. The multifunction peripheral 100 includes a main control portion 1, a printing portion 2, and a storage portion 3. The multifunction peripheral 100 also includes an operation panel 6 and a communication portion 7.

The main control portion 1 controls the entire multifunction peripheral 100. The main control portion 1 includes a CPU 11. The storage portion 3 stores programs and data related to control. The storage portion 3 includes a nonvolatile memory, such as ROM, a HDD, and a flash ROM, and a volatile memory, such as RAM. The main control portion 1 controls different blocks by use of programs and data in the storage portion 3. The main control portion 1 controls scanning, printing, transmission, storage of image data, and the like performed for jobs such as copying and transmitting.

### <Printing portion 2>

The printing portion 2 includes a sheet feed portion 2a, a conveying portion 2b, an image forming portion 2c, a fixing portion 2d, and a sheet ejection portion 2e. The sheet feed portion 2a feeds a recording sheet. The conveying portion 2b conveys the recording sheet and ejects the printed recording sheet out of the apparatus. The image forming portion 2c forms a toner image based on image data and transfers the toner image to the conveyed recording sheet. The fixing portion 2d fixes the toner image transferred to the recording sheet. The main control portion 1 controls the operation of the printing portion 2.

As shown in Fig. 2, the sheet feed portion 2a includes a plurality of sheet feed cassettes 21. In the plurality of sheet feed cassettes 21, recording sheets are stored. The recording sheets stored in each of the plurality of sheet feed cassettes 21 are different in at least one of size and orientation from each other. The main control portion 1 selects an appropriate size, orientation, and the like of recording sheets based on an instruction from a user. The main control portion 1 selects the sheet feed cassette 21 which stores the appropriate recording sheets. The sheet feed portion 2a feeds the recording sheets one after another from the selected sheet feed cassette 21 according to an instruction from the main control portion 1.

As shown in Fig. 2, a ejection tray 22 is arranged in a space between the printing portion 2 and the image reading device 200. The recording sheet having an image fixed on it in the fixing portion 2d is ejected onto the ejection tray 22 by the sheet ejection portion 2e.

### <Operation panel 6>

The operation panel 6 includes a display panel 61, a touch panel 62, and hardware keys 63. The touch panel 62 detects a position touched by a user. Based on the output from the touch panel 62, the main control portion 1 recognizes an operated part of operation images such as keys and buttons displayed on the display panel 61. The hardware keys 63 include a Start key for requesting to start a job and a numeric keypad for entering numbers. The main control portion 1 makes the display panel 61 display the status of the operation panel 6, various messages, and setting screens. The operation panel 6 accepts setting operation on the touch panel 62 and the hardware keys 63 for jobs such as scanning and copying. As will be described later, when the image reading device 200 is connected, setting and operation of the image reading device 200 may be accepted on the operation panel 6.

### <Communication portion 7>

The communication portion 7 is communicably connected to a computer 300 such as a PC, and to a server 400, a facsimile device 500, and the like via a wired and (or) wireless network, a public line, or the like. Any apparatuses other than those just mentioned that exchange image data can be connected to it.

As shown in Fig. 2, the image reading device 200 includes a housing (document stage) and is arranged over the printing portion 2 in the multifunction peripheral 100.

### <Image reading device 200>

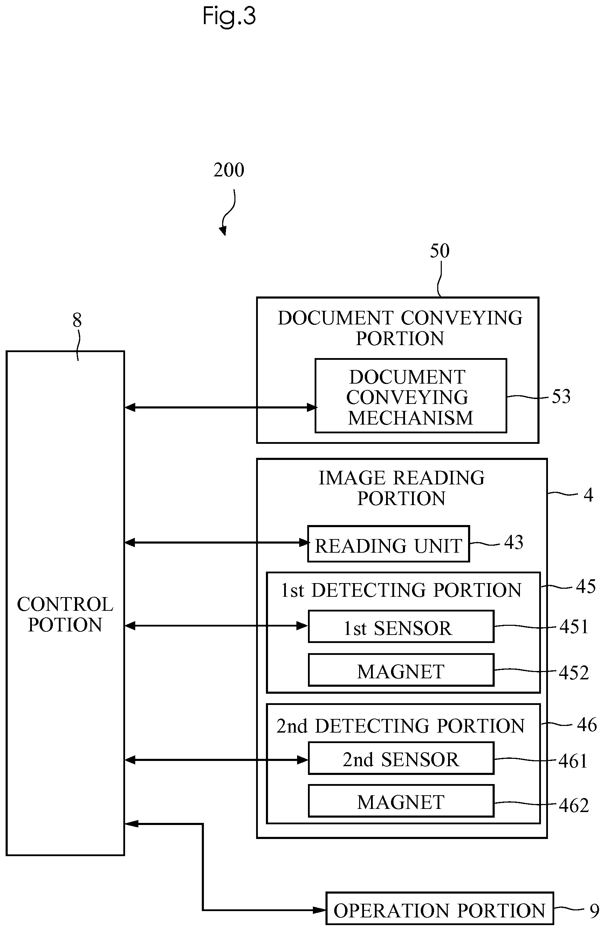

With reference to a new drawing, the image reading device 200 will be described in more detail. Fig. 3 is a functional block diagram showing a general configuration of an image reading device. As shown in Fig. 3, the image reading device 200 includes an image reading portion 4, a document conveying portion 50, a control portion 8, and an operation portion 9.

### <Image reading portion 4>

Under the control of the control portion 8, the image reading portion 4 reads the image of document arranged on the top face of a housing 40 (document stage) of the image reading portion 4 and generates image data. As shown in Fig. 2, the image reading portion 4 includes a contact glass 41 (reading face) for placing a document. The image reading portion 4 also includes a reading unit 43 which reads the image of a document placed on the contact glass 41 or a document conveyed to the contact glass 41.

The reading unit 43 irradiates the document placed on the contact glass 41 or the document conveyed to the contact glass 41 with light, and receives the reflected light with light receiving elements (unillustrated); thereby the reading unit 43 reads the document image and outputs it as image data. The reading unit 43 transmits the image data to the control portion 8. The amount of light emitted from the reading unit 43, the resolution in reading, and the like are controlled by the control portion 8.

The image reading portion 4 includes an opening/closing support portion 44, which will be described later, supporting a cover 5 such that it is openable and closable to the contact glass 41, and a first detecting portion 45 and a second detecting portion 46 sensing whether the cover 5 is open or closed. The opening/closing support portion 44 is provided at the rear of the contact glass 41 in the housing 40. The first detecting portion 45 and the second detecting portion 46 include a first detection sensor 451 and a second detection sensor 461, respectively, and the first detection sensor 451 and the second detection sensor 461 are connected to the control portion 8.

### <Cover 5>

The cover 5 is fitted over the housing 40 of the image reading portion 4. The cover 5 swings about the opening/closing support portion 44 and thereby opens and closes the top face of the contact glass 41. The cover 5 is provided with a document conveying portion 50 conveying a document in the form of sheets to the contact glass 41 one sheet after another. The document conveying portion 50 includes a document placement stage 51 on which a document is placed, a document ejection portion 52 onto which the document having undergone image reading is ejected, and a document conveying mechanism 53 (see Fig. 2). The document conveying mechanism 53 includes an unillustrated sheet feeding roller, conveying roller, and the like. As the sheet feeding roller and the conveying roller are driven, the document conveying mechanism 53 feeds the document placed on the document placement stage 51 one sheet after another and conveys it to the contact glass 41. The document conveyed to the contact glass 41 is read by the reading unit 43, and is then ejected onto the document ejection portion 52.

In the image reading device 200, the document conveyed by the document conveying portion 50 or the document placed on the contact glass 41 is optically read by the reading unit 43, and thereby image data is generated.

### <Control portion 8>

The control portion 8 includes a structure in which a CPU, a memory, an integrated circuit, and the like are mounted on a circuit board. The control portion 8 controls the reading of the document placed on the contact glass 41, the conveying of the document placed on the document conveying portion 50 to the contact glass 41, and the setting of the reading unit 43 when the document is read (for example, the amount of light emitted to the document from the reading unit, the resolution in reading, and the like). Then, the control portion 8 performs, to correct distortion of image data due to reading, processing such as trimming, shading, and the like on the image data of the document read by the reading unit 43. The control portion 8 may operate independently from the main control portion 1; instead, when the image reading device 200 is included integrally in the multifunction peripheral 100, the function of the control portion 8 may be included in the main control portion 1, that is, the main control portion 1 may perform the operation of the control portion 8.

The operation portion 9 accepts operation by a user. Based on the operation of the operation portion 9 by a user, setting and operation of the image reading device 200 are performed. For example, the operation portion 9 is provided with a reading start key (unillustrated), and as the reading start key is operated, the reading of a document is started. Though no details will be given, the operation portion 9 may be a structure that includes a hard key; instead, the operation portion 9 may be a structure, like the operation panel 6, that includes a display panel and a touch panel. When the image reading device 200 is included integrally in the multifunction peripheral 100, the operation panel 6 may be used instead of the operation portion 9. When operation is possible on the operation panel 6, the operation portion 9 may be omitted.

### <Opening/closing support portion 44>

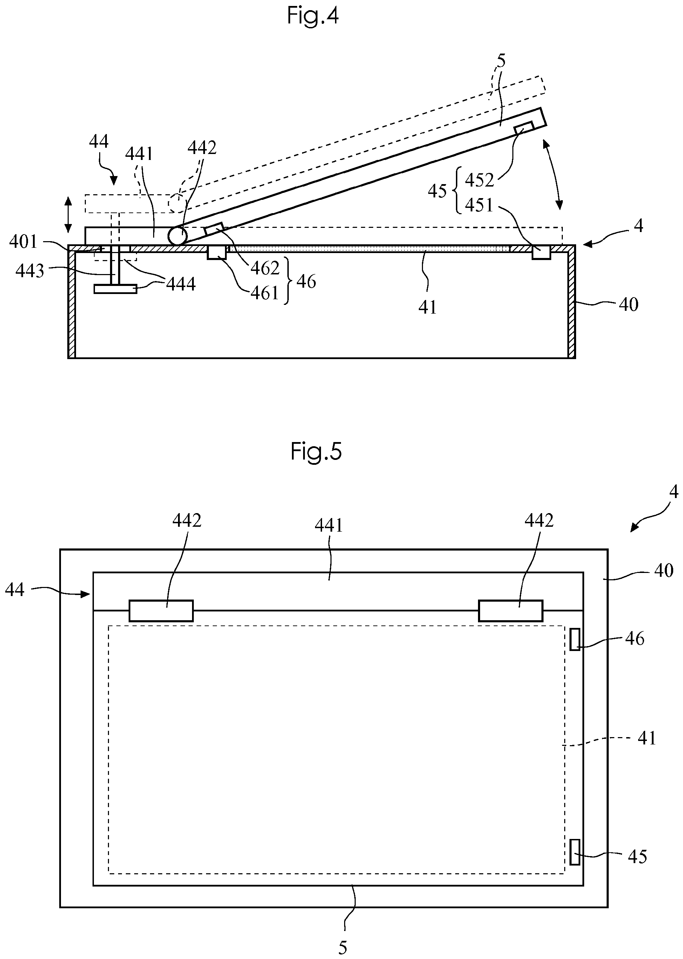

Fig. 4 is a side view of a cover fitted on the housing of the image reading portion via an opening/closing support portion. Fig. 5 is a plan view of the housing and the cover of the image reading portion shown in Fig. 4. In the description of the opening and closing of the cover, the document conveying portion 50 is omitted from illustration. That is, the description proceeds with reference to Figs. 4 and 5 on the assumption that a flat plate-shaped cover used.

As shown in Figs. 4 and 5, the opening/closing support portion 44 includes a supporting member 441, a rotary supporting part 442, a stick part 443, and a disengagement prevention part 444. The supporting member 441 is an elongate member which is arranged over the housing 40, at the rear of the contact glass 41. The supporting member 441 is placed over the housing 40. In a part of the housing 40 where it makes contact with the supporting member 441, a through hole 401 is formed. The supporting member 441 is arranged so as to be movable toward and away from the top face of the housing 40.

The rotary supporting part 442 is provided on the front side of the supporting member 441 and pivots the cover 5, acting as what is called a hinge. Two of the rotary supporting parts 442 are provided, and support the cover 5 at two places. The rotary supporting part 442 includes an angle keeping mechanism (unillustrated) which prevents the cover 5, once open at a given or larger angle to the contact glass 41, from closing, that is, moving toward the contact glass 41.

The rod part 443 protrudes downward from the bottom surface of the supporting member 441 and penetrates the through hole 401. The rod part 443 slides inside the through hole 401 when the supporting member 441 moves toward or away from the housing 40. That is, the supporting member 441 has its movement direction restricted by the rod part 443 and the through hole 401. The end part of the rod part 443 opposite to the supporting member 441 is fitted with the disengagement prevention part 444. The disengagement prevention part 444 is arranged inside the housing 40 and is larger than the through hole 401. Thus, when the supporting member 441 moves upward, together with the supporting member 441, the rod part 443 moves outside through the through hole 401. Then, when the rod part 443 moves by a predetermined or larger amount, the disengagement prevention part 444 makes contact with a rim part of the through hole 401. The disengagement prevention part 444 is larger than the through hole 401, and thus can not pass through the through hole 401. That is, the disengagement prevention part 444 makes contact with the rim part of the through hole 401, and thereby the movement of the supporting member 441 is stopped. That is, the supporting member 441 is movable across a length equal to the length obtained by subtracting the thickness of the housing 40 from the length of the rod part 443 in the axial direction (the up/down direction).

The opening/closing support portion 44 is not limited to the above-described structure. It is possible to use any of support portions having a large variety of structures that permit the rear side of the cover 5 to move a given or larger distance away from the contact glass 41 and that allow the cover 5 to be supported such that the front side is openable and closable with the rear side acting as a pivot.

### <First detecting portion 45>

The first detecting portion 45 includes a first sensor 451 and a magnet 452. The first sensor 451 includes a Hall element which can detect the change of magnetic flux, that is, whether the magnet moves toward or away from it. The first sensor 451 is arranged in the housing 40, and the magnet 452 is fitted to the cover 5. When the cover 5 is closed, the first sensor 451 and the magnet 452 overlap vertically each other.

When the distance between the first sensor 451 and the magnet 452 is equal to or smaller than a first distance L1, the first sensor 451 is ON, that is, it is in a H state. When the distance between the first sensor 451 and the magnet 452 is larger than the first distance L1, the first sensor 451 is OFF, that is, it is in a L state. The first sensor 451, when ON, transmits an H signal to the control portion 8 and, when OFF, does not transmits the signal.

### <Second detecting portion 46>

The second detecting portion 46 has a structure similar to that of the first detecting portion 45. That is, the second detecting portion 46 includes a second sensor 461 and a magnet 462. The second sensor 461 includes a Hall element. The second sensor 461 is arranged in the housing 40, and the magnet 462 is fitted to the cover 5. When the cover 5 is closed, the second sensor 461 and the magnet 462 overlap vertically each other.

When the distance between the second sensor 461 and the magnet 462 is equal to or smaller than a second distance L2, the second sensor 461 is ON, that is, it is in a H state. When the distance between the second sensor 461 and the magnet 462 is larger than the first distance L1, the second sensor 461 is OFF, that is, it is in a L state. The second sensor 461, when ON, transmits an H signal to the control portion 8 and, when OFF, does not transmits the signal.

In the first detecting portion 45, although the first sensor 451 is fitted to the housing 40 and the magnet 452 is fitted to the cover 5, this may be the other way around. However, the first sensor 451 is configured to be connected to a lead (unillustrated) for transmitting a signal to the control portion 8, and thus the first sensor 451 is preferably provided on the immovable side, that is, on the housing 40 side. Likewise, in the second detecting portion 46, although the second sensor 461 and the magnet 462 may be arranged such that one is on the housing 40 and the other one is on the cover 5, the second sensor 461 is preferably provided on the housing 40.

### <Positions of the first and second detecting portions 45 and 46>

As shown in Figs. 4 and 5, the first detecting portion 45 is arranged in a part farther from the supporting member 441 than the second detecting portion 46. Thus, the first detecting portion 45 detects the position of the front side of the cover 5 and the second detecting portion 46 detects the position of the rear side of the cover 5. As shown in Figs. 4 and 5, in the first detecting portion 45, the magnet 452 is arranged on a front-side end part of the cover 5 and the first sensor 451 is arranged on a part of the housing 40 facing the front-side end part. In the second detecting portion 46, the magnet 462 is arranged on a rear-side end part of the cover 5 and the second sensor 461 is arranged on a part of the housing 40 facing the rear-side end part. However, this is not meant as any limitation: these components may be arranged at any positions so long as they can detect the distances between the front side of the cover 5 and the contact glass 41 and between the rear side of the cover 5 and the contact glass 41.

As described above, to the control portion 8, the first sensor 451 and the second sensor 461 are connected. Based on signals from the first sensor 451 and the second sensor 461, the control portion 8 can determine whether the cover 5 is open, whether a thin document is placed on the contact glass 41, and whether a thick document is placed on the contact glass 41. Opening and closing of the cover 5 will be described in detail below.

### <Cover 5 open/closed detection>

Next, how the first detecting portion 45 and the second detecting portion 46 operate when the cover 5 is opened and closed will be described. In the image reading device 200, a thin document such as a recording sheet in the form of a sheet may be read, or a thick document such as a book may be read. In either case, with the document pressed against the contact glass 41 by the cover 5, reading is performed. In the image reading device 200, the control portion 8 can determined the thickness of a document by use of the first detecting portion 45 and the second detecting portion 46. Hereinafter, how the thickness of a document is determined will be described with reference to the accompanying drawings.

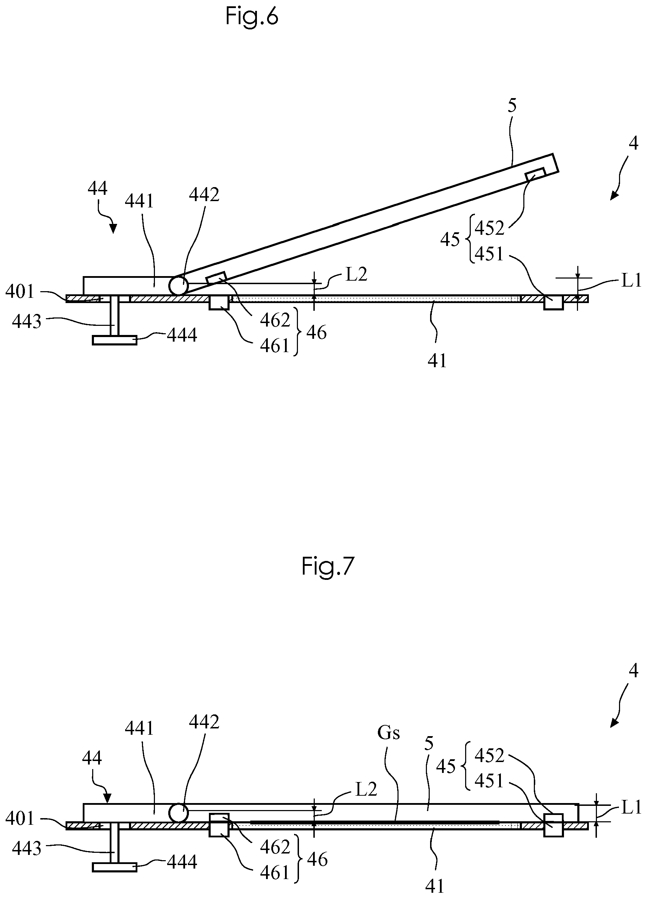

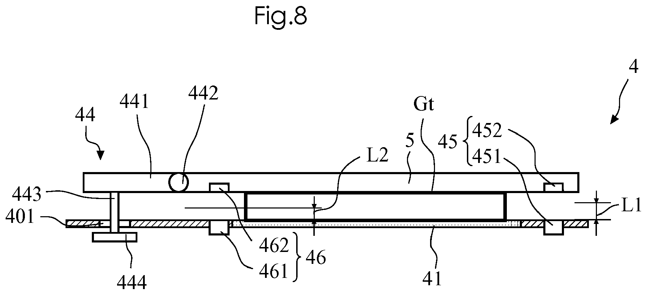

Fig. 6 is a side view showing the image reading device with the cover opened. Fig. 7 is a side view showing the image reading device with a thin document placed on the contact glass. Fig. 8 is a side view showing the image reading device with a thick document placed on the contact glass.

The cover 5 is supported on the opening/closing support portion 44. When the cover 5 is closed, the cover 5 is in contact with the contact glass 41 and the supporting member 441 is in contact with the housing 40. When image reading is performed, a user raises up the front side of the cover 5 to expose the contact glass 41 and places a document on the contact glass 41. Thus, with the supporting member 441 in contact with the housing 40, the front side of the cover 5 opens (swings) up about the rotary supporting part 442.

Here, as shown in Fig. 6, the rear-side end part of the cover 5 hardly moves away from the housing 40. As shown in Fig. 6, in the second detecting portion 46, the distance between the second sensor 461 and the magnet 462 is equal to or smaller than a second distance L2, that is, the second sensor 461 is kept in an ON state. The second sensor 461 continues transmitting an H signal to the control portion 8.

On the other hand, the front-side end part of the cover 5 is away from the housing 40. That is, as shown in Fig. 6, in the first detecting portion 45, the distance between the first sensor 451 and the magnet 452 is larger than a first distance L1. That is, the first sensor 451 is in an OFF state.

Thus, the control portion 8 determines that the cover 5 is open when the control portion 8 does not receive an H signal from the first sensor 451, that is, the first detecting portion 45 but receives an H signal from the second sensor 461, that is, the second detecting portion 46.

Next, a case where a thin document Gs is placed will be described. As shown in Fig. 7, a user places the thin document Gs on the contact glass 41 and closes the cover 5. Here, both the front and rear side end parts of the cover 5 are kept close to the housing 40. As shown in Fig. 7, in the first detecting portion 45, the distance between the first sensor 451 and the magnet 452 is equal to or smaller than a first distance L1 and the first sensor 451 is ON. The distance between the second sensor 461 and the magnet 462 is equal to or smaller than a second distance L2 and the second sensor 461 is ON. Thus, the control portion 8 receives H signals from both the first sensor 451 and the second sensor 461.

Thus, the control portion 8 determines that the thin document Gs is placed on the contact glass 41 when the control portion 8 receives an H signal from the first sensor 451, that is, the first detecting portion 45 and also receives an H signal from the second sensor 461, that is, the second detecting portion 46.

A case where a thick document Gt is placed will now be described. With the cover 5 shown in Fig. 6 opened, the thick document Gt is placed on the contact glass 41. The front side of the cover 5 is brought close to the housing 40 to close the cover 5. Here, the rear side of the cover 5 makes contact with the thick document Gt before the front side of the cover 5 makes contact with it. The front side of the cover 5 moves further in a direction approaching the housing 40 under self-weight or by user operation.

The cover 5, which has thus far been swinging about the rotary supporting part 442 of the opening/closing support portion 44 and is now in contact with the rear-side end part of the thick document Gt, starts to swing about a point of contact with the rear-side end part of the thick document Gt. Thus, the front side of the cover 5 moves closer to the housing 40 and the rear side of the cover 5 moves away from the housing 40. Here, the supporting member 441 is raised up from the housing 40 in coordination with the movement of the rear side of the cover 5.

As shown in Fig. 8, when the cover 5 is in contact with the top face of the thick document Gt, both the rear and document side end parts of the cover 5 is away from the housing 40. As shown in Fig. 8, in the first detecting portion 45, the distance between the first sensor 451 and the magnet 452 is larger than a first distance L1 and the first sensor 451 is OFF. The distance between the second sensor 461 and the magnet 462 is larger than a second distance L2 and the second sensor 461 is OFF. Thus, the control portion 8 does not receive H signals from either of the first sensor 451 and the second sensor 461.

Thus, the control portion 8 determines that the thick document Gt is placed on the contact glass 41 when the control portion 8 does not receive a signal from the first sensor 451, that is, the first detecting portion 45 and does not receive an H signal from the second sensor 461, that is, the second detecting portion 46.

### <Placement of a thin and a thick document>

In the image reading device 200, a case where a thin document Gs is placed and another case where a thick document Gt is placed will now be described. As shown in Fig. 7, a user places the thin document Gs on the contact glass 41 and closes the cover 5. Here, both the front and rear side end parts of the cover 5 are kept close to the housing 40. The cover 5 covers the contact glass 41. That is, when the thin document Gs is placed, it is possible to cover the contact glass 41 with the cover 5; thus outside light is unlikely to come in through the contact glass 41 and the light from the reading unit 43 is unlikely to leak outside.

On the other hand, when the thick document Gt is placed, outside light is likely to come in through a part where the contact glass 41 does not in contact with the document and also the light from the reading unit 43 is likely to leak outside. When the light from the reading unit 43 leaks outside, in a part where the light leaks outside, the reflected light does not come back in, and thus in image data, a part where the light leaks is printed solid black.

Thus, on the contact glass 41, between the case where the thin document Gs is placed and the case where the thick document Gt is placed, conditions of reading a document by the reading unit 43 are different. Thus, the control portion 8 prepares a setting for document reading by the reading unit 43 for when the thin document Gs is placed on the contact glass 41 and a setting for document reading by the reading unit 43 for when the thick document Gt is placed on the contact glass 41. The control portion 8 can change settings depending on the thickness of the placed document.

In both cases where the thin document Gs is placed on the contact glass 41 and where no document is placed and the cover 5 is closed, H signals are fed to the control portion 8 from both the first detecting portion 45 and the second detecting portion 46.

Accordingly, based on signals from the first detecting portion 45 and the second detecting portion 46 before the reading start key on the operation portion 9 is operated, the control portion 8 determines whether the thin document Gs is placed and whether the cover 5 is closed. The judgement of whether the thin document Gs is placed and whether the cover 5 is closed will be described with reference to the accompanying drawings.

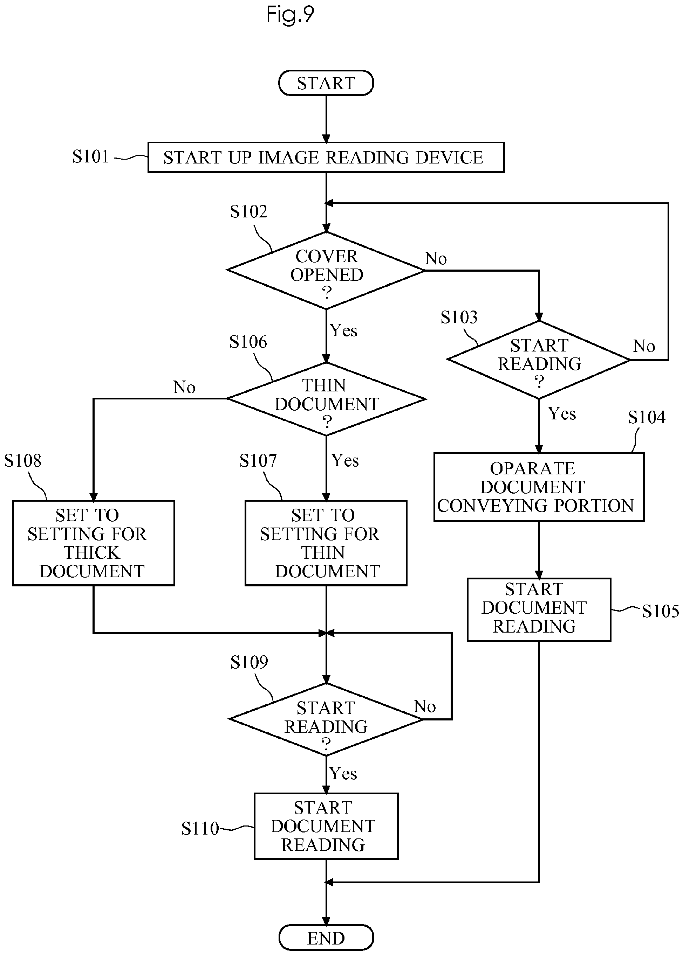

Fig. 9 is a flow chart showing a procedure for reading a document image by the image reading device according to the present disclosure. Assume here that the procedure shown in Fig. 9 is started in a state where the cover 5 is closed. For example, when document reading is not performed, the cover 5 is assumed to be closed.

The image reading device is started up when the cover 5 is opened or input to the operation portion 9 is detected (step S101).

Whenever a document is placed on the contact glass 41 and the document is read by the reading unit 43, the cover 5 is opened. Thus, the control portion 8 checks whether the cover 5 has been opened or not (step S102). Whether the cover 8 is open or not is determined whether H signals are received or not from the first detecting portion 45 and the second detecting portion 46 as described above.

If the cover 5 has not been opened (step S102, No), the control portion 8 checks whether or not the reading start key on the operation portion 9 has been operated, that is, whether or not an instruction to start reading has been received (step S103). If there has been no instruction to start reading (step S103, No), a return is made to the check of whether the cover 5 has been opened or not (step S102).

If an instruction to start reading is received (step S103, Yes), the control portion 8 determines that reading has been started without the door 5 being opened. The control portion 8 then drives the document conveying portion 50 the start to convey a document to the contact glass 41 (step S104). Then, the control portion 8 controls the reading unit 43 to start the reading of the image on the document conveyed to the contact glass 41 (step S105).

If, after a return from a sleep state, the cover 5 is opened (step S102, Yes), the control portion 8 receives H signals from the first detecting portion 45 and the second detecting portion 46. That is, the control portion 8 checks whether or not a thin document Gs is placed on the contact glass 41 (step S106). If the control portion 8 determines that the thin document Gs is placed (step S106, Yes), the control portion 8 sets the reading unit 43 for the reading of the thin document Gs (step S108).

If the control portion 8 determines that a thick document Gt is placed (the step S106, No), the control portion 8 sets the reading unit 43 for the reading of the thick document Gt (step S108).

After the control portion 8 changed the setting of the reading unit 43 (after step S107 or S108), the control portion 8 checks whether or not the reading start key on the operation portion 9 has been operated, that is, whether or not an instruction to start reading has been received (step S109). The control portion 8 waits until an instruction to start reading is received, and after an instruction to start reading is received, the control portion 8 starts to read a document (step S110).

As described above, in the image reading device 200 according to the present disclosure, the control portion 8 can determine whether the cover 5 is kept closed and whether the thin document Gs is placed according to whether or not the opening and closing of the cover 5 has been performed. Receiving signals from the first detecting portion 45 and the second detecting portion 46 enables the control portion 8 to automatically determine whether the document placed on the contact glass 41 is the thin document Gs or the thick document Gt. The control portion 8 selects a setting for reading by the reading unit 43 based on the thickness of a document, and thus it is possible to keep constant the quality of the image data read from a document image. The setting for reading may be one a previously provided, or one determined by a user may be stored and called up.

In this embodiment, the first detecting portion 45 is ON when the distance between the first sensor 451 and the magnet 452 is equal to or smaller than a first distance L1, and the second detecting portion 46 is ON when the distance between the second sensor 461 and the magnet 462 is equal to or smaller than a second distance L2. Here, the first distance L1 and the second distance L2 may be equal, or may have different values. The first distance L1 and the second distance L2 can be set such that, when the thick document Gt is placed on the contact glass 41, the first detecting portion 45 and the second detecting portion 46 are reliably OFF and, when the thin document Gs is placed, the first detecting portion 45 and the second detecting portion 46 are reliably ON. In other words, adjusting the first distance L1 and the second distance L2 makes it possible to adjust the thickness of a document detected as the thick document Gt.

As the first detecting portion 45 and the second detecting portion 46, magnetic sensors employing Hall elements which detect magnetism are used, but this is not meant as any limitation; instead, for example, non-contact sensors such as optical sensors or ultrasonic sensors may be used which can check whether or not the distance from the housing 40 to the cover 5 is equal to or more than a certain distance. Instead, sensors such as push switches may be used which, by direct contact with the cover 5 switch between ON and OFF. However, if a push switch is used as the first detecting portion, the switch may act an obstacle, and thus a push switch is preferably used as the second detecting portion.

In the multifunction peripheral 100, as described above, the image data read by the image reading device 200 is stored in the storage portion 3 and the image is recorded (printed) on a recording sheet by use of the printing portion 2.

### <Second embodiment>

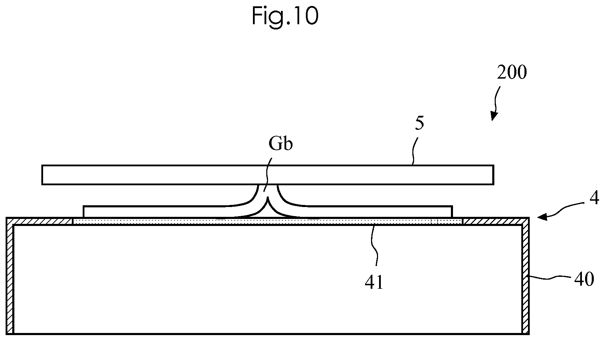

Another example of the image reading device 200 according to the present disclosure will be described with reference to the accompanying drawings. Fig. 10 is a diagram showing a state where an open book is being read on the image reading device according to the present disclosure. In the image reading device 200 according to this embodiment, the process performed by the control portion 8 during image reading differs from that in the image reading device 200 according to the first embodiment. The structure of the image reading device 200 in this embodiment is substantially the same as the structure of the image reading device 200 in the first embodiment. Accordingly, in the image reading device according to this embodiment, such elements as find substantially the same elements in the image reading device 200 according to the first embodiment are identified by common reference signs, and no detailed description of them will be given.

There can be a situation where, as shown in Fig. 10, on the image reading device 200, an image in an open book Gb (spread pages of the book Gb) is read. Many books are bound at the spine. Thus, if an open book Gb is placed on the contact glass 41, the middle part (bound part) juts up. Even if the book Gb is pressed with the cover 5 from above, the middle part is away from the contact glass 41. Depending on book size (thickness, type of binding, hardness, and the like), when an open book is placed on the contact glass 41, the control portion 8 determines that a thick document is placed.

As shown in Fig. 10, the middle part of the pages of the open book facing the contact glass 41 is curved and the image is distorted. In the image reading device 200 according to the embodiment, the control portion 8 can perform middle part distortion correction processing for correcting the middle part of the read image data for image distortion. The control portion 8 can also perform image processing for reading a character string included the read image data, that is, OCR character recognition. Any other image processing may be performed. The image processing performed here may set previously, or image processing selected by a user may be performed.

For example, when the contents of a book Gb are read on the image reading device 200, the jutting height of the middle part changes according to the pages which are open. That is, the image distortion in the middle part changes. Thus, depending on the open pages, there may be cases where the placed document is determined as a thin document Gs and where the placed document is determined as a thick document Gt. Accordingly, when the control portion 8 in the image reading device 200 according to the embodiment determines that the placed document is a thick document Gt, the control portion 8 performs the middle part distortion correction processing on the read image data. On the other hand, when the control portion 8 determines that the placed document is a thin document Gs, the control portion 8 performs no image processing.

As described above, on the image reading device 200 according to this embodiment, according to the thickness of a document, image processing is automatically performed on the read image data. Thus, it is possible to save a user the time and trouble for checking the read image data to determine whether or not to perform image processing.

Depending on the book Gb, irrespective of the open pages, it may always be determined as a thick document Gt. When such a book is placed as a document, the control portion 8 may automatically perform OCR character recognition for determining a character string from the read image data.

For another example, there can be a situation where, on the image reading device 200, images in a plurality of books are read continuously. Depending on the thickness of the books and the type of binding, they may be a mix of books determined as thin documents Gs and books determined as thick documents Gt. Even in that case, owing to the control portion 8 automatically performing image performing on the image data read according to the thickness of documents, it is possible to save a user time and trouble.

As in the first embodiment, there can be a situation where a thick document other than a book is placed. Thus, the image reading device 200 may be configured such that a mode can be selected from among a mode for reading a book (a mode in which middle part distortion correction is performed automatically), a mode for reading a normal document (a mode in which no image forming is performed), and an OCR reading mode (a mode in which OCR is performed automatically when a book is placed).

On the image reading device 200 described above, it is possible to accurately determine the thickness of the document placed on the contact glass 41. Then, after the thickness of the document is determined, it is possible to read the image under a reading condition which is automatically set according to the thickness of the document and to perform image processing on the read image data. Accordingly, it is possible to save a user time and trouble during image reading and to improve the convenience to a user.

Although, in the embodiments described above, as the image reading device 200, the image reading device 200 included in the multifunction peripheral 100 is described as an example, the image reading device 200 alone may be used independently.

Although, in the embodiments described above, as the image forming portion, an image forming portion of an electrophotography type that forms a toner image is used, it is also possible to adopt an inkjet image forming portion that forms an image by ejecting ink.

An example of an image reading device according to the present disclosure includes a document stage having a reading face, an image reading portion reading an image of a document placed on the reading face, a cover which is provided on the document stage and which opens and closes the reading face, an opening/closing support portion that is movable toward and away from the document stage, that is provided behind the reading face on the document stage, and that supports the cover such that its front side is movable toward and away from the document stage, a first detecting portion sensing that the front side of the cover is within a first distance from the document stage, a second detecting portion sensing that the opening/closing support portion is within a second distance from the document stage, and a control portion. The control portion receives first detecting information from the first detecting portion and second detecting information from the second detecting portion, and determines whether or not the placed document is a document having a predetermined or larger thickness based on the first detecting information and the second detecting information.

With this configuration, the first detecting portion detects the position of the front side of the cover and the second detecting portion detects the position of the rear side of the cover, and according to the sensing results, it is possible to detect the state of the cover (that is, whether the whole cover is in contact with or close to the reading face, whether the front side of the cover is away from the reading face, and whether the whole cover is away from the reading face). Based on the state, it is possible to determine whether or not the document placed on the reading face has a predetermined or larger thickness.

In the above-described configuration, the first distance and the second distance may be equal. With this configuration, it is possible to use the same sensors for the first detecting portion and the second detecting portion, and thus it is possible to lessen checking work during manufacture, and to reduce the manufacturing cost.

In the above-described configuration, the control portion may change the setting for document reading by the image reading portion based on the determined type of the document. For example, when a thin document is placed, the whole reading face is covered with the cover and light is unlikely to leak at the edge of the document on the reading face. On the other hand, when a thick document is placed, the gap between the reading face and the cover is formed outside the edge of the document. There can be situations where outside light comes in through the gap and where light for reading leaks outside. Thus, when a thick document is placed, reducing the amount of light from a reading unit for reading and lowering the reading resolution makes it possible to reduce variations in the quality of the read image due to the thickness of a document. Accordingly, it is possible to save a user time and trouble for changing the setting for reading for each document.

In the above-described configuration, the control portion may determine the setting for image processing on image data read by the image reading portion based on the determined type of the document. For example, when spread pages of a book are read, the book placed on the reading face has the middle part jutting up, and is often determined as a thick document. The jutting part is curved; thus light leaks and comes in as described above, and the character and image are distorted. To avoid that, when the placed document is determined as a thick document, image processing for correcting the distortion may be performed automatically. In this way, it is possible to save a user time and trouble for changing the setting for reading for each document. Examples of such image processing include not only processing for correcting the distortion in the middle part but also OCR character reading processing for reading characters. Instead, processing set by a user may be performed as far as the control portion can perform.

In the above-described configuration, the first detecting portion may be ON when the front side of the cover is within the first distance from the document stage, and the second detecting portion may be ON when the opening/closing support portion is within the second distance from the document stage. Then, the control portion may determine that the cover is open when only the first detecting portion is ON, that the placed document is a document in a form of a sheet when both the first detecting portion and the second detecting portion are ON, and that the placed document is a document having the predetermined or larger thickness when neither the first detecting portion nor the second detecting portion is ON. Thus, according to whether the first detecting portion and the second detecting portion are ON or OFF, it is possible to easily check the position of the cover and whether the placed document is a thick document or not. The first detecting portion may be one which is OFF when the front side of the cover is within the first distance from the document stage, and the second detecting portion may be one which is OFF when the opening/closing support portion is within the second distance from the document stage. Furthermore, the first detecting portion and the second detecting portion may detect the positions of the cover and the document stage in grades. Here, the setting for reading and the setting for image processing may be changed according to the detected grade.

In the above-described configuration, at least one of the first detection portion and the second detecting portion may be a sensor comprising a combination of a magnet and a Hall element, or may be a push switch.

It should be understood that the embodiments of the present disclosure described above are in no way meant to limit its scope; the present disclosure can be implemented with any modifications made without departing from its spirit.

### Industrial Applicability

The present disclosure is applicable to a sheet processing device for binding a bundle of sheets, and to an image forming apparatus incorporating such a sheet processing device.

## Claims

1. An image reading device including:
a document stage having a reading face;
an image reading portion reading an image of a document placed on the reading face;
a cover provided on the document stage, the cover opening and closing the reading face;
an opening/closing support portion movable toward and away from the document stage, the opening/closing support portion being provided behind the reading face on the document stage, the opening/closing support portion supporting the cover such that a front side thereof is movable toward and away from the document stage;
a first detecting portion sensing that the front side of the cover is within a first distance from the document stage;
a second detecting portion sensing that the opening/closing support portion is within a second distance from the document stage; and
a control portion,
wherein
the control portion
receives first detecting information from the first detecting portion and second detecting information from the second detecting portion, and
determines whether or not the placed document is a document having a predetermined or larger thickness based on the first detecting information and the second detecting information.

2. The image reading device according to the claim 1, wherein
the first distance and the second distance are equal.

3. The image reading device according to the claim 1, wherein
the control portion changes a setting for document reading by the image reading portion based on a determined type of the document.

4. The image reading device according to the claim 1, wherein
the control portion determines a setting for image processing on image data read by the image reading portion based on a determined type of the document.

5. The image reading device according to the claim 1, wherein
the first detecting portion is ON when the front side of the cover is within the first distance from the document stage,
the second detecting portion is ON when the opening/closing support portion is within the second distance from the document stage,
the control portion determines,
when only the first detecting portion is ON, that the cover is open,
when both the first detecting portion and the second detecting portion are ON, that the placed document is a document in a form of a sheet, and
when neither the first detecting portion nor the second detecting portion is ON, that the placed document is a document having the predetermined or larger thickness.

6. The image reading device according to the claim 1, wherein
at least one of the first detection portion and the second detecting portion is a sensor comprising a combination of a magnet and a Hall element.

7. The image reading device according to the claim 1, wherein
at least one of the first detection portion and the second detecting portion is a push switch.

8. An image forming apparatus, including:
the image reading device according to the claim 1;
a storage portion storing image data read by the image reading device; and
a printing portion printing the image data on a recording medium.
